# EUROPÄISCHE PATENTANMELDUNG

(11) **EP 2 600 595 A2**
(43) Veröffentlichungstag der Anmeldung: **05.06.2013**
(21) Anmeldenummer: 12007442.2
(22) Anmeldetag: 31.10.2012
(51) Int. Cl.: H04M 1/253, H04M 1/02

(54) **VoIP-Telefonie-Unterputz-Elektro-Installationsgerät**

(30) Priorität: 29.11.2011 DE 102011119680
(71) Anmelder: ABB AG, 68309 Mannheim (DE)
(72) Erfinder: Bambakas, Konstantin, 67063 Ludwigshafen (DE)

(57) **Zusammenfassung**

Es wird ein VoIP-Telefonie-Unterputz-Elektro-Installationsgerät (1A, 1B, 1C, 1D, 1E, 1 F) mit einem Unterputz-Gerätesockel (2) inklusive eines Spannungsanschlussblocks (15) für die Verbindung mit 230V-Netz-Anschlussleitungen (46), mit einer Zentralscheibe (19) und mit einem Abdeckrahmen (8) vorgeschlagen,
● wobei ein zum Aufladen eines mobilen Funk-Telefon-Apparates (23A, 23B) geeignetes Netzteil (14) im Unterputz-Gerätesockel (2) integriert ist,
● wobei die Zentralscheibe (19) eine Halterung (21) für den mobilen Funk-Telefon-Apparat (23A, 23B) aufweist, welche mit einer Lade-Anschluss-Kontaktierungsvorrichtung (16) versehen ist
● und wobei der Unterputz-Gerätesockel (2) Mittel (7 + 5 + 11; 5 + 11; 10 + 5 + 11; 49; 50; 10 + 50) zur Funksignal-Bereitstellung an den mobilen Funk-Telefon-Apparat (23A, 23B) aufweist.

## Beschreibung

Die Erfindung bezieht sich auf ein Unterputz-Elektro-Installationsgerät mit einem Unterputz-Gerätesockel inklusive eines Spannungsanschlussblocks für die Verbindung mit 230V-Netz-Anschlussleitungen, mit einer Zentralscheibe und mit einem Abdeckrahmen, wobei ein zum Aufladen eines mobilen Funk-Telefon-Apparates geeignetes Netzteil im Unterputz-Gerätesockel integriert ist und wobei die Zentralscheibe eine Halterung für den mobilen Funk-Telefon-Apparat aufweist, welche mit einer Lade-Anschluss-Kontaktierungsvorrichtung versehen ist.

Ein solches Unterputz-Elektro-Installationsgerät ist aus der DE 10 2009 017 265 A1 bekannt. Dort wird ein elektrisches Installationsgerät mit Ladegerät für ein Mobiltelefon mit einem in Form eines Unterputz-Gerätes ausgebildeten und in eine handelsübliche Unterputzdose montierbaren Gerätesockel vorgeschlagen, welcher ein Ladegerät und einen elektrischen Anschluss für ein Wechselspannungsnetz aufweist. Das elektrische Installationsgerät weist frontseitig eine taschenförmige Abdeckung zum senkrechten Einstecken eines Mobiltelefons auf. Im Bodenbereich des durch die Abdeckung geschaffenen Innenraums ist ein Podest mit einer Anschlussschnittstelle für die Kontaktierung der Ladeanschlusssteckbuchse des Mobiltelefons angeordnet.

Der Erfindung liegt die Aufgabe zugrunde, ein Unterputz-Elektro-Installationsgerät der eingangs genannten Art zu schaffen, das über diesen allgemeinen Standard hinausgehende erweiterte Funktionen aufweist.

Diese Aufgabe wird erfindungsgemäß gelöst durch ein VolP-Telefonie-Unterputz-Elektro-Installationsgerät mit einem Unterputz-Gerätesockel inklusive eines Spannungsanschlussblocks für die Verbindung mit 230V-Netz-Anschlussleitungen, mit einer Zentralscheibe und mit einem Abdeckrahmen,
● wobei ein zum Aufladen eines mobilen Funk-Telefon-Apparates geeignetes Netzteil im Unterputz-Gerätesockel integriert ist,
● wobei die Zentralscheibe eine Halterung für den mobilen Funk-Telefon-Apparat aufweist, welche mit einer Lade-Anschluss-Kontaktierungsvorrichtung versehen ist
● und wobei der Unterputz-Gerätesockel Mittel zur Funksignal-Bereitstellung an den mobilen Funk-Telefon-Apparat aufweist.

VolP (Voice over Internet Protocol) bezeichnet die Internet-Telefonie, auch IP-Telefonie oder Internet-Protokoll-Telefonie.

Dabei können die Mittel als WLAN-Repeater-Baustein (Wireless Local Area Network, Drahtlosnetzwerk) ausgeführt sein, welcher das Internet-Signal über Funk empfängt und in verstärkter Form weitersendet. Der Funk-Telefon-Apparat entspricht bei dieser Ausführungsform einem SIP-Telefon und weist einen VolP/SIP-Client-Baustein für die VolP-Telefonie auf.

Gemäß einer alternativen Ausführungsform können die Mittel als Wireless-Access-Point-Baustein ausgeführt sein, welcher das Internet-Signal über ein Kabel, insbesondere ein Ethernet-Kabel, empfängt und via Funk abstrahlt. Der Funk-Telefon-Apparat entspricht bei dieser Ausführungsform einem SIP-Telefon und weist einen VolP/SIP-Client-Baustein für die VolP-Telefonie auf.

Gemäß einer weiteren alternativen Ausführungsform können die Mittel als Wireless-Access-Point-Baustein ausgeführt sein, welcher das Internet-Signal über einen Adapter aus den 230V-Netz-Anschlussleitungen empfängt und via Funk abstrahlt. Es handelt sich um einen PowerLAN-Adapter, auch dLAN (direct LAN) oder Powerline Communication PLC Adapter. Der Funk-Telefon-Apparat entspricht bei dieser Ausführungsform einem SIP-Telefon und weist einen VolP/SIP-Client-Baustein für die VolP-Telefonie auf.

Gemäß einer weiteren alternativen Ausführungsform können die Mittel als Elektronik-Baustein ausgeführt sein, welcher das über Funk empfangene Internet-Signal in ein Funksignal gemäß DECT-Standard (Digital Enhanced Cordless Telecommunications) wandelt. Der Funk-Telefon-Apparat entspricht bei dieser Ausführungsform einem DECT-Telefon und weist eine für die DECT-Funkübertragung geeignete Elektronik auf.

Gemäß einer weiteren alternativen Ausführungsform können die Mittel als Elektronik-Baustein ausgeführt sein, welcher das über ein Kabel, insbesondere Ethernet-Kabel, empfangene Internet-Signal in ein Funksignal gemäß DECT-Standard wandelt. Der Funk-Telefon-Apparat entspricht bei dieser Ausführungsform einem DECT-Telefon und weist eine für die DECT-Funkübertragung geeignete Elektronik auf.

Gemäß einer weiteren alternativen Ausführungsform können die Mittel als Elektronik-Baustein ausgeführt sein, welcher das über einen Adapter (PowerLAN-Adapter oder Powerline Communication Adapter) aus den 230V-Netz-Anschlussleitungen empfangene Internet-Signal in ein Funksignal gemäß DECT-Standard wandelt. Der Funk-Telefon-Apparat entspricht bei dieser Ausführungsform einem DECT-Telefon und weist eine für die DECT-Funkübertragung geeignete Elektronik auf.

Wenn vorstehend von DECT-Funkübertragung die Rede ist, so schließt dies andere zukünftige Formen der schnurlosen Telekommunikation für sogenannte picozellulare Telefonie innerhalb von Gebäuden keinesfalls aus.

Die mit der Erfindung erzielbaren Vorteile bestehen insbesondere darin, dass eine Integration der VolP-Telefonie in ein Standard-Unterputz-Elektro-Installationsgeräte-Programm erfolgt. Von großer Wichtigkeit ist dabei die Verfügbarkeit des Internet-Signals im VolP-Telefonie-Unterputz-Elektro-Installationsgerät selbst, denn hierdurch hat der Anwender bei unterschiedlichen Anwendungsfällen stets die notwendige Sicherheit, dass er nach Installation des VolP-Telefonie-Unterputz-Elektro-Installationsgeräts im gewünschten Wohnraum auch auf das Internet-Signal und damit auch auf das für den mobilen Funk-Telefon-Apparat erforderliche Signal zugreifen kann. Die Verfügbarkeit des Internet-Signals wird wahlweise drahtlos oder über Kabel oder über das auch zur Spannungsversorgung dienende 230V-Wechselspannungsnetz sichergestellt.

Weitere Vorteile des vorgeschlagenen VolP-Telefonie-Unterputz-Elektro-Installationsgeräts bestehen darin, dass keinerlei störende (Netz-) Kabel für das Ladegerät zur Aufladung der Akkumulatoren des mobilen Funk-Telefon-Apparates erforderlich sind. Für den Funk-Telefon-Apparat ist keinerlei zusätzlicher Platzbedarf (beispielsweise Tischfläche, Arbeitsfläche) erforderlich. Der Anwender kennt stets den konkreten Standort des mobilen Funk-Telefon-Apparates. Durch Installation von mehreren vorgeschlagenen VolP-Telefonie-Unterputz-Elektro-Installationsgeräten - jeweils inklusive eines mobilen Funk-Telefon-Apparates - in mehreren Räumen eines Gebäudes kann in einfacher Weise eine interne Haus-Sprechanlage eingerichtet werden.

Das VolP-Telefonie-Unterputz-Elektro-Installationsgerät kann in Einfach-Ausführung (stand alone) oder in Mehrfach-Kombination (z. B. 2fach-Kombination, 3fach-Kombination, 4fach-Kombination) zusammen mit Schaltern, Dimmern, Steckdosen usw. eingesetzt werden. Derartige Standard-Unterputz-Installationsgeräte-Programme sind in vielfältiger Art mit unterschiedlichem Design, unterschiedlicher Farbgebung und unter Einsatz unterschiedlicher Materialien (z. B. Kunststoff, Edelstahl) verfügbar. Auf die vorgeschlagene Weise wird das VolP-Telefonie-Unterputz-Elektro-Installationsgerät harmonisch und formschön in ein Unterputz-Programm eingebunden und stellt keinen "Fremdkörper" im Hinblick auf Steckdosen, Schalter, Dimmer, Tastsensoren, EIB/KONNEX-Geräte der Hauskommunikation, Bewegungsmelder usw. dar.

Die Erfindung wird nachstehend an Hand der in der Zeichnung dargestellten Ausführungsbeispiele erläutert. Es zeigen:
- Fig. 1: eine erste Ausführungsform des VolP-Telefonie-Unterputz-Elektro-Installationsgeräts mit drahtlosem Internet-Signal-Zugang und DECT-Funksignal-Abstrahlung,
- Fig. 2: eine zweite Ausführungsform des VolP-Telefonie-Unterputz-Elektro-Installationsgeräts mit kabelgebundenem Internet-Signal-Zugang und DECT-Funksignal-Abstrahlung,
- Fig. 3: eine dritte Ausführungsform des VolP-Telefonie-Unterputz-Elektro-Installationsgeräts mit netzgebundenem Internet-Signal-Zugang und DECT-Funksignal-Abstrahlung,
- Fig. 4: eine vierte Ausführungsform des VolP-Telefonie-Unterputz-Elektro-Installationsgeräts mit drahtlosem Internet-Signal-Zugang und Funktion als WLAN-Repeater,
- Fig. 5: eine fünfte Ausführungsform des VolP-Telefonie-Unterputz-Elektro-Installationsgeräts mit kabelgebundenem Internet-Signal-Zugang und Funktion als Wireless Access Point,
- Fig. 6: eine sechste Ausführungsform des VolP-Telefonie-Unterputz-Elektro-Installationsgeräts mit netzgebundenem Internet-Signal-Zugang und Funktion als Wireless Access Point,
- Fig. 7: eine Sicht auf ein VolP-Telefonie-Unterputz-Elektro-Installationsgerät,
- Fig. 8: eine Sicht auf einen mobilen Funk-Telefon-Apparat,
- Fig. 9: einen seitlichen Schnitt durch ein VolP-Telefonie-Unterputz-Elektro-Installationsgerät.

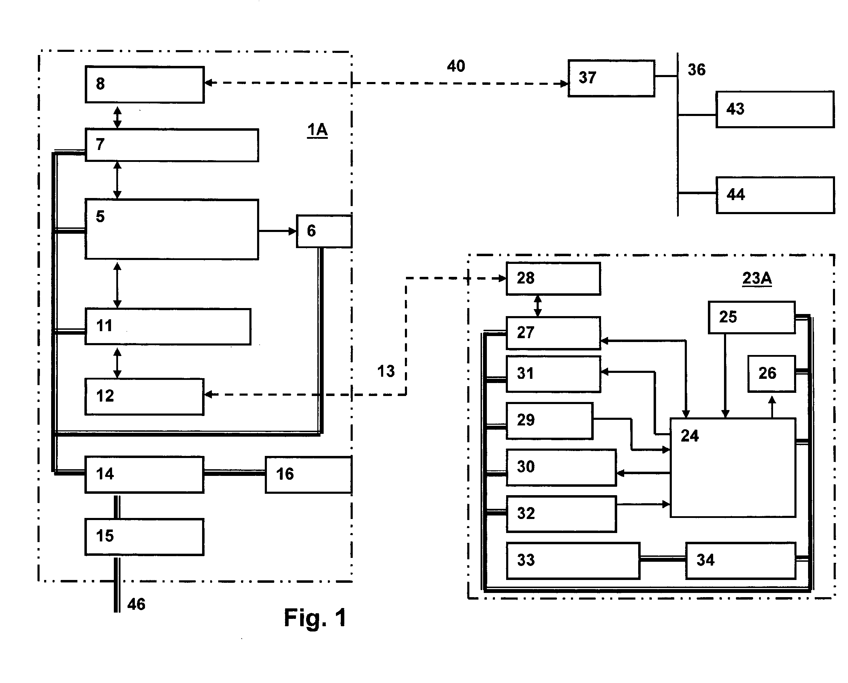

In Fig. 1 ist eine erste Ausführungsform des VolP-Telefonie-Unterputz-Elektro-Installationsgeräts mit drahtlosem Internet-Signal-Zugang und DECT-Funksignal-Abstrahlung dargestellt. Bei dieser ersten Ausführungsform enthält das VolP-Telefonie-Unterputz-Elektro-Installationsgerät 1A erster Ausführungsform einen Elektronik-Baustein 5, welcher über einen drahtlosen Internet-Sender / Empfänger 7 und eine Funk-Antenne 8 Internet-Signale 40 eines an das Internet 36 angeschlossenen WLAN-Routers 37 über Funk empfängt, respektive welcher über den drahtlosen Internet-Sender / Empfänger 7 und die Funk-Antenne 8 Internet-Signale 40 an diesen WLAN-Router 37 sendet. Des Weiteren enthält das VolP-Telefonie-Unterputz-Elektro-Installationsgerät 1A ein Läutewerk 6 und einen Funk-Sender / Empfänger 11, welcher über eine Funk-Antenne 12 drahtlose Signale 13 eines dem VolP-Telefonie-Unterputz-Elektro-Installationsgerät 1A zugeordneten separaten mobilen Funk-Telefon-Apparates 23A empfängt, respektive welcher über die Funk-Antenne 12 drahtlose Signale 13 an den separaten mobilen Funk-Telefon-Apparat 23A sendet. Diese drahtlosen Signale 13 sind vorzugsweise dem DECT-Standard (Digital Enhanced Cordless Telecommunications) entsprechend ausgebildet.

Der separate mobile Funk-Telefon-Apparat 23A weist ein Läutewerk 31, eine Bedieneinheit 25 zur Eingabe eines gewünschten Teilnehmers 44, sowie für sonstige Funktionen, wie z. B. Einstellung der Lautstärke und für Konfigurationsarbeiten, eine Anzeigeeinheit 26 zur Darstellung des angewählten Teilnehmers 44, zur Darstellung vorgenommener Konfigurationen und (optional) zur Darstellung eines während eines Telefongespräches empfangenen Bildes des Teilnehmers 44, einen Elektronik-Baustein 24 und einen Funk-Sender / Empfänger 27 zum Senden respektive Empfangen drahtloser Signale 13 an den respektive von dem Funk-Sender / Empfänger 11 des VolP-Telefonie-Unterputz-Elektro-Installationsgeräts 1A über eine Funk-Antenne 28 auf. Unter dem Begriff "drahtlose Signale" sind subsumiert:
● digitale Audio-Signale vom VolP-Telefonie-Unterputz-Elektro-Installationsgerät 1A zum mobilen Funk-Telefon-Apparat 23A, welche dort vom Elektronik-Baustein 24 in analoge Audio-Signale zur Ausgabe an einen Lautsprecher 30 umgewandelt werden;
● optional digitale Video-Signale vom VolP-Telefonie-Unterputz-Elektro-Installationsgerät 1A zum mobilen Funk-Telefon-Apparat 23A, welche dort vom Elektronik-Baustein 24 in Form digitaler Video-Signale an die Anzeigeeinheit 26 abgegeben werden;
● von einem Mikrofon 29 des mobilen Funk-Telefon-Apparats 23A in analoger Form erzeugte und vom Elektronik-Baustein 24 in digitale Audio-Signale umgewandelte Signale vom mobilen Funk-Telefon-Apparat 23A zum VolP-Telefonie-Unterputz-Elektro-Installationsgerät 1A;
● optional von einer optionalen Kamera 32 des mobilen Funk-Telefon-Apparats 23A erzeugte Video-Signale vom mobilen Funk-Telefon-Apparat 23A zum VolP-Telefonie-Unterputz-Elektro-Installationsgerät 1A.

In den vorstehend erwähnten Elektronik-Bausteinen 5, 24 sind Kodierer und Dekodierer im Zusammenhang mit dem Datenaustausch zwischen den miteinander telefonierenden Teilnehmern von Wichtigkeit. d. h. mit Hilfe eines Codecs werden analoge Daten (Audio-Signale, optional Video-Signale) in digitale Daten und umgekehrt umgewandelt.

Die Energieversorgung des VolP-Telefonie-Unterputz-Elektro-Installationsgeräts 1A erfolgt über 230V-Netz-Anschlussleitungen 46 aus einem 230V-Wechselspannungsnetz über einen entsprechend gestalteten Spannungsanschlussblock 15 und ein Netzteil 14, an welches der Elektronik-Baustein 5, der drahtlose Internet-Sender / Empfänger 7, der Funk-Sender / Empfänger 11 und das Läutewerk 6 angeschlossen sind. Zweckmäßig ist das Netzteil 14 des Weiteren mit einer Lade-Anschluss-Kontaktierungsvorrichtung 16 verbunden, welche mit einer korrespondierend hierzu ausgestalteten Lade-Anschluss-Kontaktierungsvorrichtung 33 des mobilen Funk-Telefon-Apparats 23A elektrisch kontaktierbar ist, um derart einen Akkumulator aufzuladen, welcher zur Energieversorgung 34 des mobilen Funk-Telefon-Apparats 23A dient und mit der Bedieneinheit 25, der Anzeigeeinheit 26, dem Elektronik-Baustein 24, der Kamera 32 (optional), dem Lautsprecher 30, dem Mikrofon 29, dem Funk-Sender / Empfänger 27 und dem Läutewerk 31 verbunden ist.

Ein Vermittlungsserver 43 des Internets 36 dient zur Authenitfizierung / Identifikation der miteinander telefonierenden Teilnehmer unter Beachtung / Kenntnis ihrer jeweils aktuellen (änderbaren) IP-Adressen (Hinterlegung der aktuellen IP-Adresse beim Vermittlungsserver 43 unter einem Benutzernamen) und damit zum Verbindungsaufbau bezüglich VolP.

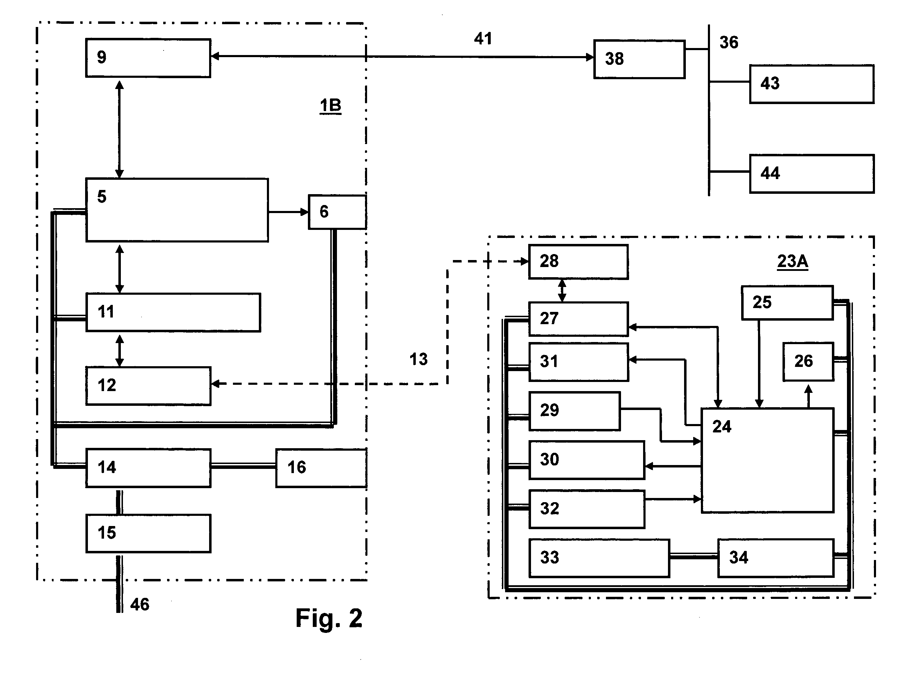

In Fig. 2 ist eine zweite Ausführungsform des VolP-Telefonie-Unterputz-Elektro-Installationsgeräts mit kabelgebundenem Internet-Signal-Zugang und DECT-Funksignal-Abstrahlung dargestellt. Beim dieser Ausführungsform wird an Stelle des WLAN-Routers 37 der Figur 1 ein Router 38 eingesetzt, welcher ein drahtgebundenes Internet-Signal 41 über ein (Ethernet-) Kabel und über eine Internet-Anschluss-(Steck)Vorrichtung 9 des VolP-Telefonie-Unterputz-Elektro-Installationsgeräts 1 B zweiter Ausführungsform zum Elektronik-Baustein 5 des VolP-Telefonie-Unterputz-Elektro-Installationsgeräts 1 B führt. Dementsprechend entfallen bei der Ausführungsform des VolP-Telefonie-Unterputz-Elektro-Installationsgeräts 1 B nach Figur 2 der drahtlose Internet-Sender / Empfänger 7 und die Funk-Antenne 8 des VolP-Telefonie-Unterputz-Elektro-Installationsgeräts 1A. Der übrige Schaltungsaufbau ist wie unter Figur 1 beschrieben.

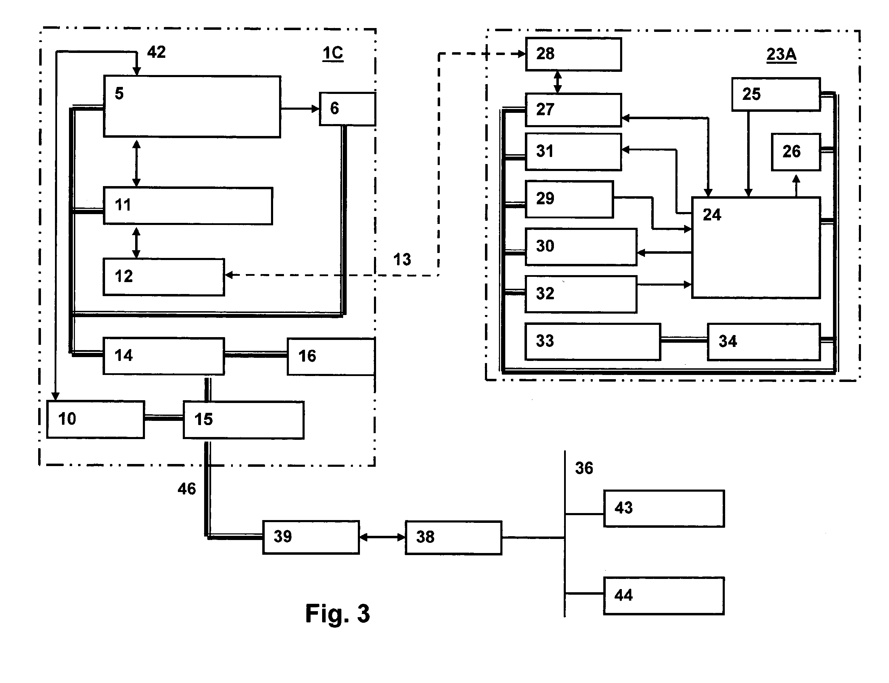

In Fig. 3 ist eine dritte Ausführungsform des VolP-Telefonie-Unterputz-Elektro-Installationsgeräts mit netzgebundenem Internet-Signal-Zugang und DECT-Funksignal-Abstrahlung dargestellt. Bei dieser Ausführungsform versorgt der unter Figur 2 erwähnte Router 38 einen Adapter 39 mit dem Internet-Signal und dieser Adapter 39 prägt das Internet-Signal der Spannung des 230V-Wechselspannungsnetzes auf. Dementsprechend weist das VolP-Telefonie-Unterputz-Elektro-Installationsgerät 1C dritter Ausführungsform einen Adapter 10 auf, welcher das über die 230V-Netz-Anschlussleitungen 46 übertragene Internet-Signal 42 ausfiltert und dem Elektronik-Baustein 5 zuleitet. Gleichermaßen prägt der Adapter 10 des VolP-Telefonie-Unterputz-Elektro-Installationsgeräts 1C dem 230V-Wechselspannungsnetz das vom Elektronik-Baustein 5 erzeugte Internet-Signal auf und der Adapter 39 filtert das über das 230V-Wechselspannungsnetz übertragene Internet-Signal aus und führt es dem Router 38 zu. Dementsprechend entfallen bei der Ausführungsform des VolP-Telefonie-Unterputz-Elektro-Installationsgeräts 1C nach Figur 3 sowohl der drahtlose Internet-Sender / Empfänger 7 mit Funk-Antenne 8 gemäß der Ausführungsform des Unterputz-Elektro-Installationsgeräts 1A nach Figur 1 als auch die Internet-Anschluss-(Steck)Vorrichtung 9 gemäß der Ausführungsform des VolP-Telefonie-Unterputz-Elektro-Installationsgeräts 1 B nach Figur 2. Der übrige Schaltungsaufbau ist wie unter Figur 1 beschrieben.

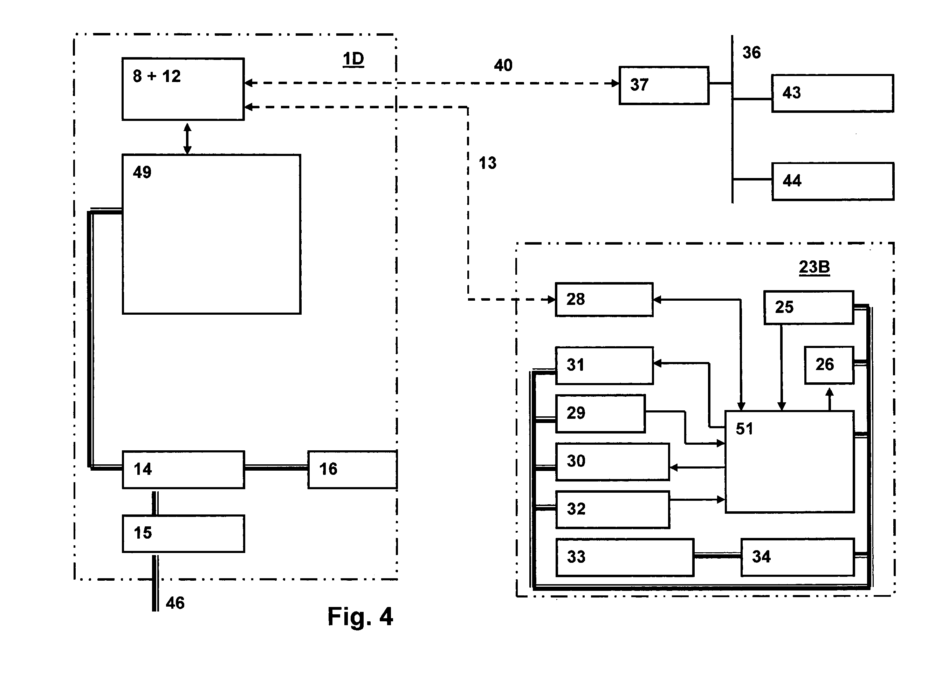

In Fig. 4 ist eine vierte Ausführungsform des VolP-Telefonie-Unterputz-Elektro-Installationsgeräts mit drahtlosem Internet-Signal-Zugang und Funktion als WLAN-Repeater dargestellt. Diese vierte Ausführungsform des VolP-Telefonie-Unterputz - Elektro-Installationsgerätes 1 D knüpft an die Ausführungsform gemäß Fig. 1 an, abweichend hiervon
● sind die Funktionen des drahtlosen Internet-Senders / Empfängers 7, des Funk-Senders / Empfängers 11 und des Elektronik-Bausteins 5 des VolP-Telefonie-Unterputz-Elektro-Installationsgeräts in Form eines WLAN-Repeater-Bausteins 49 zusammengefasst,
● sind die Antennen 8 und 12 zu einer einzigen Antenne 8 + 12 zusammengefasst,
● entfällt das Läutewerk 6 beim VolP-Telefonie-Unterputz-Elektro-Installationsgerät,
● sind die Funktionen des Funk-Senders / Empfängers 27 und des Elektronik-Bausteins 24 beim mobilen Funk-Telefon-Apparat 23B in Form eines VolP/SIP-Client-Bausteins 51 (Voice over IP / Session Initiation Protocol) zusammengefasst.

Der übrige Schaltungsaufbau ist wie unter Figur 1 beschrieben.

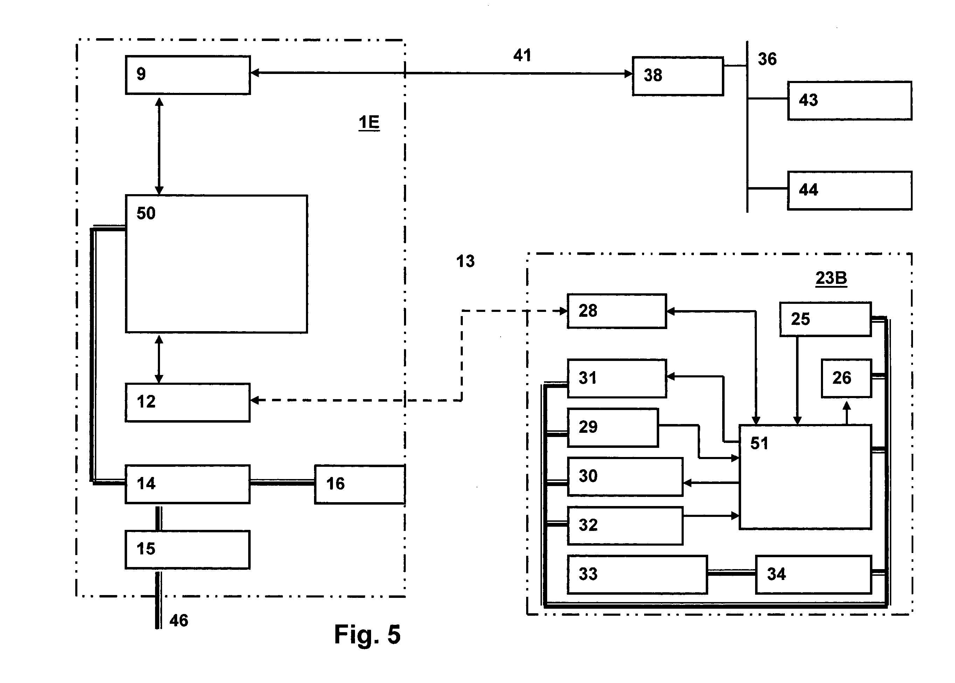

In Fig. 5 ist eine fünfte Ausführungsform des VolP-Telefonie-Unterputz-Elektro-Installationsgeräts mit kabelgebundenem Internet-Signal-Zugang und Funktion als Wireless Access Point dargestellt. Diese fünfte Ausführungsform des VolP-Telefonie-Unterputz-Elektro-Installationsgeräts 1 E knüpft an die Ausführungsform gemäß Fig. 2 an, abweichend hiervon
● sind die Funktionen des Funk-Senders / Empfängers 11 und des Elektronik-Bausteins 5 des VolP-Telefonie-Unterputz-Elektro-Installationsgeräts in Form eines Wireless-Access-Point-Bausteins 50 zusammengefasst,
● entfällt das Läutewerk 6 beim VolP-Telefonie-Unterputz-Elektro-Installationsgerät,
● sind die Funktionen des Funk-Senders / Empfängers 27 und des Elektronik-Bausteins 24 beim mobilen Funk-Telefon-Apparat 23B in Form eines VolP/SIP-Client-Bausteins 51 (Voice over IP / Session Initiation Protocol) zusammengefasst.

Der übrige Schaltungsaufbau ist wie unter Figur 2 beschrieben.

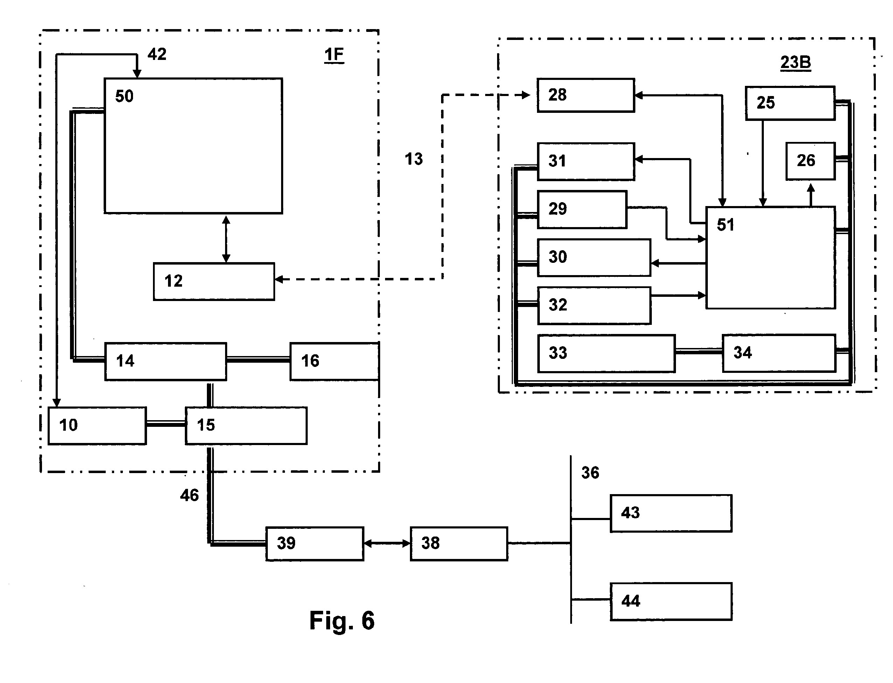

In Fig. 6 ist eine sechste Ausführungsform des VolP-Telefonie-Unterputz-Elektro-Installationsgeräts mit netzgebundenem Internet-Signal-Zugang und Funktion als Wireless Access Point dargestellt. Diese vierte Ausführungsform des VolP-Telefonie-Unterputz-Elektro-Installationsgeräts 1 F knüpft an die Ausführungsform gemäß Fig. 3 an, abweichend hiervon
● sind die Funktionen des Funk-Senders / Empfängers 11 und des Elektronik-Bausteins 5 des VolP-Telefonie-Unterputz-Elektro-Installationsgeräts in Form eines Wireless-Access-Point-Bausteins 50 zusammengefasst,
● entfällt das Läutewerk 6 beim VolP-Telefonie-Unterputz-Elektro-Installationsgerät,
● sind die Funktionen des Funk-Senders / Empfängers 27 und des Elektronik-Bausteins 24 beim mobilen Funk-Telefon-Apparat 23B in Form eines VolP/SIP-Client-Bausteins 51 (Voice over IP / Session Initiation Protocol) zusammengefasst.

Der übrige Schaltungsaufbau ist wie unter Figur 3 beschrieben.

Während bei den Ausführungsformen gemäß den Figuren 1 - 3 zusätzlich eine Signalwandlung vom Internet-Signal zum DECT-Funksignal im VolP-Telefonie-Unterputz-Elektro-Installationsgerät erfolgt, um in dieser Weise VolP-Telefonie zu ermöglichen (d. h. der mobile Funk-Telefon-Apparat 23A selbst ist nicht unmittelbar "VolP-fähig", sondern "DECT-fähig"), entfällt dies bei den Ausführungsformen gemäß den Figuren 4 - 6, bei denen der mobile Funk-Telefon-Apparat 23B selbst unmittelbar "VolP-fähig" ist (d. h. einem SIP-Telefon entspricht).

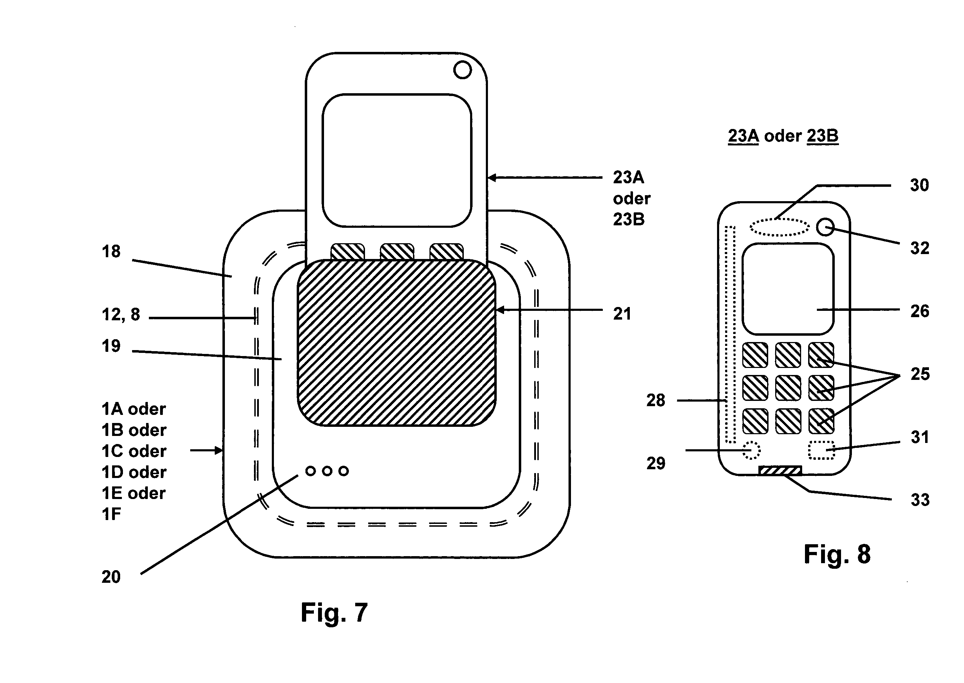

In Fig. 7 ist eine Sicht auf ein VolP-Telefonie-Unterputz-Elektro-Installationsgerät dargestellt. Das entsprechend einer der vorstehend unter den Figuren 1 - 6 erläuterten Ausführungsformen ausgebildete VolP-Telefonie-Unterputz-Elektro-Installationsgerät 1 A oder 1 B oder 1C oder 1 D oder 1 E oder 1 F besteht aus den Haupt-Komponenten Zentralscheibe 19, Abdeckrahmen 18 und Unterputz-Gerätesockel, wobei der Unterputz-Gerätesockel in der gezeigten Frontansicht naturgemäß von der Zentralscheibe 19 und dem Abdeckrahmen 18 verdeckt ist. Die Zentralscheibe 19 weist eine Halterung 21 zum Einstecken / Halten des mobilen Funk-Telefon-Apparats 23A, 23B inklusive integrierter Lade-Anschluss-Kontaktierungsvorrichtung auf. Zweckmäßig ist mindestens eine Öffnung 20 für das Läutewerk-Signal in der Zentralscheibe 19 vorgesehen (entfällt bei den VolP-Telefonie-Unterputz-Elektro-Installationsgeräten 1 D, 1 E, 1 F). Die vorstehend erwähnten Funk-Antennen 8, 12 können zweckmäßig im Abdeckrahmen 18, ersatzweise auch in der Zentralscheibe 19 integriert sein.

In Fig. 8 ist eine Sicht auf einen mobilen Funk-Telefon-Apparat dargestellt. Der mobile Funk-Telefon-Apparat 23A, 23B weist die Anzeigeeinheit 26, die Bedieneinheit 25, (optional) eine Kamera 32 und die Lade-Anschluss-Kontaktierungsvorrichtung 33 in Form elektrischer Kontakte auf. Einige der im Innenraum des mobilen Funk-Telefon-Apparates 23A, 23B integrierten Komponenten, wie Lautsprecher 30, Funk-Antenne 28, Mikrofon 29 und Läutewerk 31 sind mit gestricheltem Linienzug skizziert.

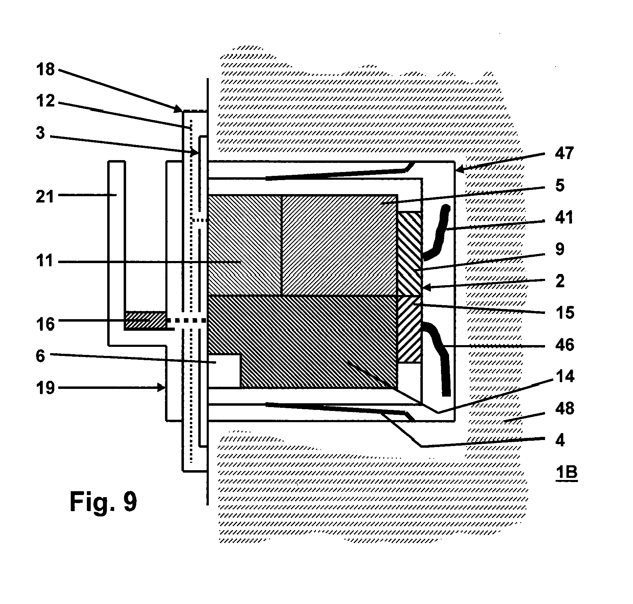

In Fig. 9 ist ein seitlicher Schnitt durch ein VolP-Telefonie-Unterputz-Elektro-Installationsgerät dargestellt, und zwar ist beispielhaft das VolP-Telefonie-Unterputz-Elektro-Installationsgerät 1 B gezeigt. Es ist eine Wand 48 zu erkennen, in welcher eine UP-Gerätedose 47 montiert ist. Im Bodenbereich der UP-Gerätedose 47 münden 230V-Anschlussleitungen 46 sowie ein (Ethernet-) Kabel 41, welches mit dem Internet-Signal beaufschlagt ist. Es sind die Haupt-Komponenten des VolP-Telefonie-Unterputz-Elektro-Installationsgeräts 1 B, wie Unterputz-Gerätesockel 2 (Elektronikeinsatz), Zentralscheibe 19 und Abdeckrahmen 18 zu erkennen.

Der Unterputz-Gerätesockel 2 - der wie allgemein bei Unterputz-Installationsgeräten üblich mit Tragring 3 und Spreizen 4 für die Befestigung in der UP-Gerätedose 47 ausgerüstet ist - enthält die vorstehend erwähnten elektrischen / elektronischen Komponenten, wie Elektronik-Baustein 5, Netzteil 14, Funk- Sender / Empfänger 11 sowie Läutewerk 6 und weist an seiner Bodenseite die erforderlichen Anschlüsse auf, wie den Spannungsanschlussblock 15 für die Anbindung der 230V-Netz-Anschlussleitungen 46 und die Internet-Anschluss-(Steck)Vorrichtung 9.

Die Zentralscheibe 19 weist die Halterung 21 zur Aufnahme des mobilen Funk-Telefon-Apparates 23A, 23B auf, wobei die Lade-Anschluss-Kontaktierungsvorrichtung 16 zweckmäßig im Bodenbereich der Halterung 21 angeordnet ist. Die elektrische Verbindung zwischen der Lade-Anschluss-Kontaktierungsvorrichtung 16 und dem Netzteil 14 ist gestrichelt skizziert. Die Antenne 12 kann im Abdeckrahmen 18 eingebunden sein, wie gestrichelt angedeutet, oder ersatzweise in der Zentralscheibe 19, gegebenenfalls in ihrer Halterung 21.

Vorstehend ist beispielhaft der Unterputz-Gerätesockel 2 eines VolP-Telefonie-Unterputz-Elektro-Installationsgeräts 1 B beschrieben, selbstverständlich sind die Unterputz-Gerätesockel 2 der VolP-Telefonie-Unterputz-Elektro-Installationsgeräte 1A, 1C, 1 D, 1 E, 1 F entsprechend unterschiedlich ausgebildet und weisen entsprechend den vorstehenden Erläuterungen entsprechend andere oder weitere elektrische / elektronische Komponenten auf, wie beispielsweise einen drahtlosen Internet-Sender / Empfänger 7, eine weitere Funk-Antenne 8 oder einen Adapter 10. Des Weiteren können je nach Ausführungsform Komponenten zu einem WLAN-Repeater-Baustein 49 oder zu einem Wireless-Access-Point-Baustein 50 zusammengefasst sein.

### Bezugszeichenliste

- 1A, 1B, 1C: VolP-Telefonie-Unterputz-Elektro-Installationsgerät
- 1 D, 1E, 1F: VolP-Telefonie-Unterputz-Elektro-Installationsgerät
- 2: Unterputz-Gerätesockel (Elektronikeinsatz)
- 3: Tragring
- 4: Spreizen
- 5: Elektronik-Baustein
- 6: Läutewerk
- 7: drahtloser Internet-Sender / Empfänger
- 8: Funk-Antenne
- 9: Internet-Anschluss-(Steck)Vorrichtung
- 10: Adapter
- 11: Funk-Sender / Empfänger
- 12: Funk-Antenne
- 13: drahtlose Signale zwischen Installationsgerät und Telefon-Apparat
- 14: Netzteil
- 15: Spannungsanschlussblock
- 16: Lade-Anschluss-Kontaktierungsvorrichtung
- 17: -
- 18: Abdeckrahmen
- 19: Zentralscheibe
- 20: Öffnung für Läutewerk-Signal
- 21: Halterung für den mobilen Funk-Telefon-Apparat
- 22: -
- 23A, 23B: mobiler Funk-Telefon-Apparat
- 24: Elektronik-Baustein
- 25: Bedieneinheit
- 26: Anzeigeeinheit
- 27: Funk-Sender / Empfänger
- 28: Funk-Antenne
- 29: Mikrofon
- 30: Lautsprecher
- 31: Läutewerk
- 32: Kamera
- 33: Lade-Anschluss-Kontaktierungsvorrichtung
- 34: Energieversorgung (Akkumulator)
- 35: -
- 36: Internet
- 37: WLAN-Router
- 38: Router
- 39: Adapter
- 40: Internet-Signal über Funk
- 41: Internet-Signal über (Ethernet-) Kabel
- 42: Internet-Signal über Adapter
- 43: Vermittlungs-Server
- 44: Teilnehmer
- 45: -
- 46: 230V-Netz-Anschlussleitungen
- 47: UP-Gerätedose
- 48: Wand
- 49: WLAN-Repeater-Baustein
- 50: Wireless-Access-Point-Baustein
- 51: VolP/SIP-Client-Baustein

## Patentansprüche

1. VolP-Telefonie-Unterputz-Elektro-Installationsgerät (1A, 1 B, 1C, 1 D, 1 E, 1 F) mit einem Unterputz-Gerätesockel (2) inklusive eines Spannungsanschlussblocks (15) für die Verbindung mit 230V-Netz-Anschlussleitungen (46), mit einer Zentralscheibe (19) und mit einem Abdeckrahmen (8),
● wobei ein zum Aufladen eines mobilen Funk-Telefon-Apparates (23A, 23B) geeignetes Netzteil (14) im Unterputz-Gerätesockel (2) integriert ist,
● wobei die Zentralscheibe (19) eine Halterung (21) für den mobilen Funk-Telefon-Apparat (23A, 23B) aufweist, welche mit einer Lade-Anschluss-Kontaktierungsvorrichtung (16) versehen ist
● und wobei der Unterputz-Gerätesockel (2) Mittel (7 + 5 + 11; 5 + 11; 10 + 5 + 11; 49; 50; 10 + 50) zur Funksignal-Bereitstellung an den mobilen Funk-Telefon-Apparat (23A, 23B) aufweist.

2. VolP-Telefonie-Unterputz-Elektro-Installationsgerät nach Anspruch 1,
**dadurch gekennzeichnet, dass** die Mittel als WLAN-Repeater-Baustein (49) ausgeführt sind, welcher das Internet-Signal (40) über Funk empfängt.

3. VolP-Telefonie-Unterputz-Elektro-Installationsgerät nach Anspruch 1,
**dadurch gekennzeichnet, dass** die Mittel als Wireless-Access-Point-Baustein (50) ausgeführt sind, welcher das Internet-Signal (41) über ein Kabel, insbesondere Ethernet-Kabel, empfängt.

4. VolP-Telefonie-Unterputz-Elektro-Installationsgerät nach Anspruch 1,
**dadurch gekennzeichnet, dass** die Mittel als Wireless-Access-Point-Baustein (50) ausgeführt sind, welcher das Internet-Signal (42) über einen Adapter (10) aus den 230V-Netz-Anschlussleitungen (46) empfängt.

5. VolP-Telefonie-Unterputz-Elektro-Installationsgerät nach Anspruch 1,
**dadurch gekennzeichnet, dass** die Mittel als Elektronik-Baustein (5) ausgeführt sind, welcher das über Funk empfangene Internet-Signal (40) in ein Funksignal gemäß DECT-Standard wandelt.

6. VolP-Telefonie-Unterputz-Elektro-Installationsgerät nach Anspruch 1,
**dadurch gekennzeichnet, dass** die Mittel als Elektronik-Baustein (5) ausgeführt sind, welcher das über ein Kabel, insbesondere Ethernet-Kabel, empfangene Internet-Signal (41) in ein Funksignal gemäß DECT-Standard wandelt.

7. VolP-Telefonie-Unterputz-Elektro-Installationsgerät nach Anspruch 1,
**dadurch gekennzeichnet, dass** die Mittel als Elektronik-Baustein (5) ausgeführt sind, welcher das über einen Adapter (10) aus den 230V-Netz-Anschlussleitungen (46) empfangene Internet-Signal (42) in ein Funksignal gemäß DECT-Standard wandelt.
